## Europäisches Patentamt

## European Patent Office

## Office européen des brevets

(11) Veröffentlichungsnummer: **0 131 332**
**B1**

(12) # EUROPÄISCHE PATENTSCHRIFT

(45) Veröffentlichungstag der Patentschrift:
14.01.87

(51) Int. Cl.⁴: **H 01 B 13/20**

(21) Anmeldenummer: **84200953.2**

(22) Anmeldetag: **02.07.84**

(54) Vorrichtung zum Aufspritzen von Isolierscheiben auf den Innenleiter von Hochfrequenzkoaxialkabeln.

(30) Priorität: **06.07.83 DE 3324348**

(43) Veröffentlichungstag der Anmeldung:
**16.01.85 Patentblatt 85/3**

(45) Bekanntmachung des Hinweises auf die Patenterteilung:
**14.01.87 Patentblatt 87/3**

(84) Benannte Vertragsstaaten:
**AT DE FR GB**

(56) Entgegenhaltungen:
**US-A-4 141 952**

(73) Patentinhaber: **Philips Patentverwaltung GmbH,
Billstrasse 80, D-2000 Hamburg 28 (DE)**

(84) Benannte Vertragsstaaten: **DE**

(73) Patentinhaber: **N.V. Philips' Gloeilampenfabrieken,
Groenewoudseweg 1, NL- 5621 BA Eindhoven (NL)**

(84) Benannte Vertragsstaaten: **FR GB AT**

(72) Erfinder: **Ditscheid, Hans Leo, Am Birkenbusch 1,
D-5060 Bergisch Gladbach (DE)**

(74) Vertreter: **Meier, Friedrich, Dipl.- Ing., c/o
PHILIPS PATENTVERWALTUNG GMBH
Billstrasse 80 Postfach 10 51 49, D-2000 Hamburg
28 (DE)**

LIBER, STOCKHOLM 1987

**Beschreibung**

Die Erfindung betrifft eine Vorrichtung zum Aufspritzen von Isolierscheiben auf den Innenleiter von Hochfrequenzkoaxialkabeln mit einem zylindrischen, um seine Längsachse drehbaren Werkzeugträger, an dessen Umfang sich radial angeordnete und mit radial nach außen verlaufenden Angußkanälen versehene Formnester zur Bildung der Isolierscheiben befinden, wobei sich die Formnester zur Aufnahme des Innenleiters öffnen und schließen lassen, mit einem Versorgungssystem für das Spritzmaterial, dessen Spritzdüse gegen die Mantelfläche des Werkzeugträgers gerichtet ist, und mit einer Trenneinrichtung zur Abtrennung des beim Spritzvorgang gebildeten Spritzmaterialstreifens von den Isolierscheiben.

Eine derartige Vorrichtung ist bereits aus der DE-B-26 27 677 bekannt. Der mit den Isolierscheiben versehene Innenleiter verläßt dabei den Werkzeugträger in gestrecktem Zustand, während die einzelnen Isolierscheiben noch mit dem beim Spritzen auf der Mantelfläche gebildeten Spritzmaterialstreifen untereinander verbunden sind. Da der Spritzmaterialstreifen unter einem Radius hergestellt wird, der größer ist als derjenige, auf dem der Innenleiter verläuft, ergeben sich nach dem Strecken des Innenleiters aufgrund der Überlänge des Spritzmaterialstreifens Verwerfungen dieses Streifens, so daß die Isolierscheiben durch einseitig angreifende, unterschiedlich große Schub- und Biegekräfte aus ihrer Sollposition verschoben und gelockert werden.

Dieser die Qualität des Hochfrequenzkabels mindernde Effekt ist umso ausgeprägter, je unvollständiger die Isolierscheiben ausgehärtet sind. Da bei der bekannten Vorrichtung die Größe der Spritzdüsenöffnung etwa dem Durchmesser der Angußkanäle entspricht, können die gespritzten Isolierscheiben, insbesondere bei hohen Fertigungsgeschwindigkeiten, nicht mit der erforderlichen Nachdruckzeit komprimiert werden, so daß sie nur unvollständig aushärten bzw. den Innenleiter nicht im erforderlichen Maße umschließen und sich damit beim Angreifen äußerer Kräfte eher lockern.

Bei höheren Fertigungsgeschwindigkeiten stellt sich ferner das Problem, daß die Isolierscheiben vor ihrem Austreten aus dem Werkzeugkörper nicht schnell genug abgekühlt werden können, wodurch sich ihre Haftung auf dem Innenleiter vermindert. Darüber hinaus besteht bei höheren Geschwindigkeiten die Gefahr, daß die Formnester zur Bildung der Isolierscheiben nur unvollständig mit Spritzmaterial ausgefüllt werden, da die Extruderschnecke das nahezu nicht komprimierbare Spritzmaterial nur in der Menge zur Verfügung stellt, die zwischen zwei Angußkanälen als Spritzmaterialstreifen benötigt wird und während der relativ kurzen Uberdeckungszeit von Spritzdüse und Angußkanal nur ein Teil der Spritzmasse in die Formnester eintreten darf, da sonst der als Gleitfilm dienende Spritzmaterialstreifen unterbrochen werden würde. In Ermangelwng eines ausreichenden Spritzdruckes würde auch hier kein fester Sitz der Isolierscheiben auf dem Innenleiter möglich sein.

Aufgabe der Erfindung ist es, eine Vorrichtung zu schaffen, mit deren Hilfe Isolierscheiben auf einen Innenleiter eines Hochfrequenzkoaxialkabels mit verbesserter Stabilität und erhöhter Fertigungsgeschwindigkeit aufgebracht werden können.

Die Aufgabe der Erfindung wird dadurch gelöst, daß die Spritzdüse schlitzförmig ausgebildet ist und die Schlitzlängsrichtung in Umfangsrichtung des Werkzeugträgers verläuft, daß die Längsausdehnung des Düsenschlitzes größer als der Abstand benachbarter Angußkanäle ist und daß die Trenneinrichtung relativ zum Werkzeugträger so angeordnet ist, daß sie den Spritzmaterialfilm von den Isolierscheiben an einer Stelle des Werkzeugtragers trennt, an der die Formnester noch geschlossen sind.

Duch die schlitzförmige Ausbildung der Spritzdüse wird erreicht, daß auch bei hohen Fertigungsgeschwindigkeiten die Zeit zur vollständigen Ausfüllung der Formnester mit Spritzmaterial und darüber hinaus die zum Aushärten der Isolierscheiben notwendige Nachdruckzeit bereitgestellt werden kann, so daß einwandfreie und fest auf dem Innenleiter sitzende Isolierscheiben erzeugbar sind. Die erfindungsgemäße Anordnung der Trenneinrichtung verhindert zudem, daß die so erzeugten Isolierscheiben nach Verlassen des Werkzeugträgers gelockert werden, da bei geschlossenen Formnestern die Isolierscheiben relativ zum Innenleiter fest positioniert sind.

Die erhöhte Fertigungsgeschwindigkeit der Vorrichtung nach der Erfindung ermöglicht es außerdem, diese Vorrichtung mit anderen, schneller arbeitenden Fertigungsstufen zur Herstellung eines Hochfrequenzkoaxialkabels zu kombinieren, so daß die Wirtschaftlichkeit des genannten Kabelherstellungsprozesses gegenüber einem Herstellungsprozeß mit jeweils getrennten Verfahrensstufen vergrößert ist.

Nach einer vorteilhaften Ausbildung der Erfindung ist die Stirnfläche der Spritzdüse mit einer Ausnehmung versehen, die die Ausdehnung des Spritzmaterialfilms in Laufrichtung des Werkzeugträgers begünstigt, gegen die Laufrichtung und senkrecht dazu jedoch eingeschränkt ist. Hierdurch läßt sich ein vergleichsweise homogenerer Spritzmaterialstreifen erzeugen, der gegenüber dem bekannten einfacher von den Isolierscheiben abgelöst werden kann.

Nach einer anderen vorteilhaften Ausbildung der Erfindung besitzt die Spritzdüse eine Schlitzlänge, die größer als der Abstand zweier benachbarter Angußkanäle ist. Die Füllzeit und die Nachdruckzeit wird dadurch noch weiter gesteigert, so daß die Qualität der Isolierscheiben bzw. ihr Haftsitz auf dem Innenleiter weiter verbessert ist.

Die Trenneinrichtung ist vorteilhaft rollen- oder walzenförmig ausgebildet oder besteht aus einem umlaufenden Band, wobei die Rotations- bzw. Drehachsen parallel zur Längsachse des Werkzeugträgers verlaufen. Durch eine derart ausgebildete Trenneinrichtung läßt sich der Spritzmaterialstreifen in einfacher Weise von den Isolierscheiben, die noch in den geschlossenen Formnestern des Werkzeugträgers festgehalten sind, z. B. abreißen. Dazu kann die Trenneinrichtung zweckmäßigerweise aus paarweise gleichen und gegeneinander bzw. mit entgegengesetztem Drehsinn betriebenen Transportelementen bestehen.

Die Zeichnug stellt ein Ausführungsbeispiel der Erfindung dar. Es zeigen:

Fig. 1 eine Vorrichtung nach der Erfindung mit einer rollenförmigen Trenneinrichtung,

Fig. 2a einen Teil des Werkzeugträgers mit an seinem Außenmantel anliegendem Spritzkopf und

Fig. 2b die Vorderansicht des Spritzkopfes.

Bei der Vorrichtung nach der Erfindung wird der Innenleiter 1 des Hochfrequenzkoaxialkabels über eine Umlenkscheibe 2 dem um seine Achse 3 drehenden zylindrischen Werkzeugträger 4 zugeführt. Der Innenleiter 1 ist im Träger 4 von den Werkzeugteilen umschlossen und so gelagert, daß er durch die Zentren der zur Formung der Isolierscheiben 5 im Werkzeugträger 4 vorhandenen Formnester 6 verläuft. Ein stationärer Extruder 7 drückt den thermoplastischen Isolierstoff (Spritzmaterial) kontinuierlich durch die Spritzdüse 8 gegen die Mantelfläche des rotierenden Werkzeugträgers 4. Sobald die radial nach außen weisenden Angußkanäle 9 der Formnester 6 die Spritzdüse 8 passieren, füllt die Spritzmasse die Formnester 6. Ein Spritzmaterial-Überschuß läuft in den Spalt zwischen der Düsenstirnfläche und der Mantelfläche des umlaufenden Werkzeugträgers 4 und bildet auf diesem einen ununterbrochenen Streifen 10 aus extrudiertem Isolierstoff, der als Gleitfilm für den elastisch auf dem Werkzeugträger 4 aufsitzenden Spritzdüsenkopf 8 dient und die diskreten Angüsse der Isolierscheiben 5 miteinander verbindet.

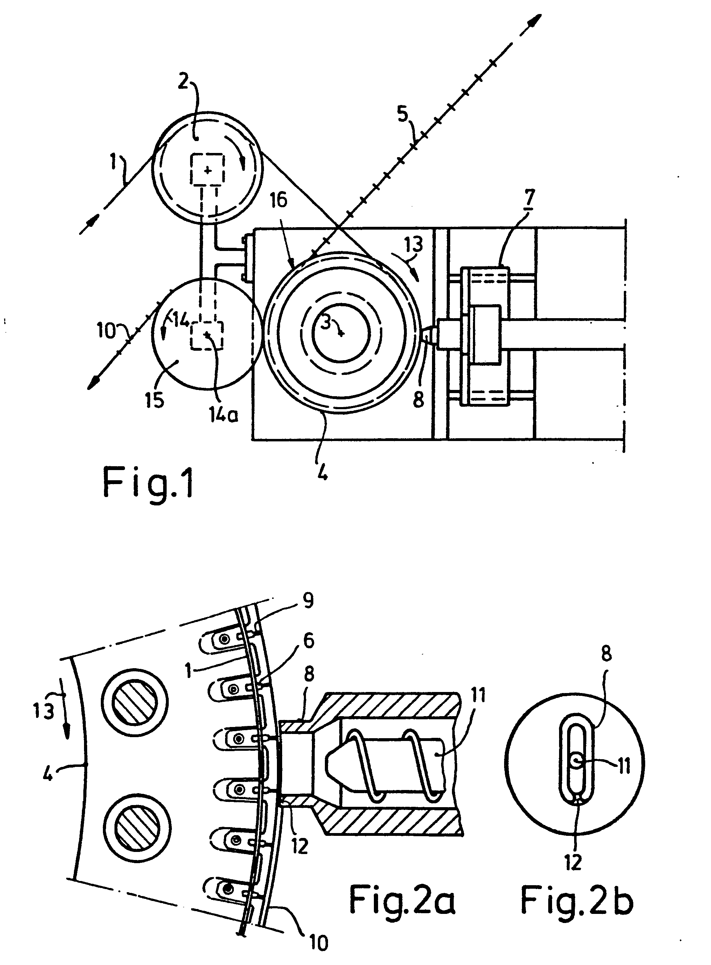

Wie aus Fig. 2a und 2b ersichtlich, ist der Kopf der Spritzdüse 8 schlitzförmig ausgebildet und liegt mit seiner Schlitzlängsrichtung in Umfàngsrichtung des Werkzeugträgers 4. Die Schlitzlänge ist dabei so gewählt, daß von der Spritzdüse 8 zwei Angußkanäle 9 gleichzeitig und vollständig beaufschlagbar sind. Dadurch wird jeder Angußkanal dem von der Schnecke 11 im Extruderzylinder aufgebauten Spritzdruck so lange ausgesetzt, daß ausreichend Zeit sowohl für das Füllen der Formnester 6 als auch für den Nachpreßvorgang auch bei relativ großer Winkelgeschwindigkeit des Werkzeugträgers 4 verbleibt.

Die Spritzdüse 8 besitzt an der ablaufenden Schmalseite eine schlitzförmige Ausnehmung 12, die der Formgebung des Streifens 10 (Spritzmaterialfilm) dient. Diese Ausnehmung 12 begünstigt die Ausdehnung des Spritzmaterialfilms 10 in Laufrichtung 13 des Werkzeugträgers 4. Hierdurch läßt sich ein relativ homogener Spritzmaterialfilm 10 gewinnen, der leicht ablösbar ist. Mit der konkaven Ausbildung der Stirnfläche der Spritzdüse 8 ist diese dem Radius des Werkzeugträgers 4 angepaßt.

Der Spritzmaterialfilm 10 wird erfindungsgemäß etwa an der der Extruderposition gegenüberliegenden position des Werkzeugträgers 4 von einem synchron mit dem Werkzeugträger 4 in Pfeilrichtung 14 umlaufenden, als Trenneinrichtung 15 dienenden Fördersystem tangential auf dieses übergeleitet und dabei von den noch fest von den Formnestern 6 eingeschlossenen Isolierscheiben 5 abgerissen.

Da die Isolierscheiben 5 in den Formnestern 6 während dieses Vorganges noch hermetisch umschlossen sind, ist es ohne elang, wenn durch eine relativ hohe Umlaufgeschwindigkeit der Werkzeugoberfläche und der damit verbundenen Reduzierung der Abkühlzeit die Schmelze in den Formnestern 6 noch nicht völlig erstarrt ist. Nach dem Offnen der Formnester 6 an der mit 16 bezeichneten Stelle in Fig. 1 verläßt der die Isoliescheiben 5 tragende Innenleiter 1 tangential den Werkzeugräger 4. Auf die Isolierscheiben 5 wird bis zu ihrer ausreichenden Abkühlung, die auch zwangsweise beschleunigt werden kann, keine Kraft ausgeübt, die eine Auslenkung der Isolierscheiben 5 und damit eine Qualitätsminderung des Kabels bewirken könnte.

Das als Trenneinrichtung 14 vorgesehene Fördersystem kann z.B. als Rolle, Walze oder als umlaufendes Förderband ausgebildet sein, wobei die Rotationsachsen 14a parallel zur Zylinderachse 3 des Werkzeugträges 4 verlaufen. Die Trenneinrichtung 15 kann aber auch aus paarweise gleichen Transportelementen, z. H. Walzen, bestehen, die sich zum Transport des Spritzmaterialfilms 10 in entgegengesetzter Richtung drehen und damit den Spritzmaterialfilm 10 von den Isolierscheiben 5 abreißen. Selbstverständlich läßt sich der Spritzmaterialfilm 10 von den Isolierscheiben 5 auch auf andere Weise abtrennen, z.B. durch geeignet angeordnete Schneidmesser.

## Patentansprüche

1. Vorrichtung zum Aufspritzen von Isolierscheiben (5) auf den Innenleiter (1) von Hochfrequenzkoaxialkabeln mit einem zylindrischen, um seine Längsachse drehbaren Werkzeugträger, (4) an dessen Umfang sich radial angeordnete und mit radial nach außen verlaufenden Angußkanälen (9) versehene Formnester (6) zur Hildung der Isolierscheiben (5) befinden, wobei sich die Formnester (6) zur Aufnahme des Innenleiters (1) öffnen und schließen lassen, mit einem Versorgungssystem für das Spritzmaterial, dessen Spritzdüse (8) gegen die Mantelfläche des Werkzeugträgers (4) gerichtet ist, und mit einer Trenneinrichtung (15) zur Abtrennung des beim Spritzvorgang gebildeten Spritzmaterialfilms (10) von den Isolierscheiben (5), **dadurch gekennzeichnet,** daß die Spritzdüse (8) schlitzförmig ausgebildet ist und die Schlitzlängsrichtung in Umfangsrichtung des Werkzeugträgers (4) verläuft, daß die Längsausdehnung des Düsenschlitzes größer als der Abstand benachbarter Angußkanäle (9) ist und daß die Trenneinrichtung (15) relativ zum Werkzeugträger so angeordnet ist, daß sie den Spritzmaterialfilm (10) von den Isolierscheiben (5) an einer Stelle des Werkzeugträgers trennt, an der die Formnester (6) noch geschlossen sind.

2. Vorrichtung nach Anspruch 1, **dadurch gekennzeichnet,** daß die Stirnfläche der Spritzdüse (8) an der ablaufenden Schmalseite mit einer Ausnehmung (12) versehen ist, durch die die Ausdehnung des Spritzmaterialfilms (10) in Laufrichtung (13) des Werkzeugträgers (4) begünstigt ist.

3. Vorrichtung nach Anspruch 1 oder 2, **dadurch gekennzeichnet,** daß die Spritzdüse (8) eine Schlitzlange besitzt, die größer als der Abstand zweier benachbarter Angußkanäle (8) ist.

4. Vorrichtung nach Anspruch 1, 2 oder 3, **dadurch gekennzeichnet,** daß die Stirnfläche der Spritzdüse (8) konkav entsprechend der Krümmung des Werkzeugkörpers (4) geformt ist.

5. Vorrichtung nach einem oder mehreren der Ansprüche 1 bis 4, **dadurch gekennzeichnet,** daß die Trenneinrichtung (15) rollen- oder walzenförmig ausgebildet ist oder aus einem umlaufenden Band besteht, deren Rotations- (14a) bzw. Drehachsen parallel zur Drehachse (3) des Werkzeugträgers (4) verlaufen.

6. Vorrichtung nach Anspruch 5, **dadurch gekennzeichnet,** daß die Trenneinrichtung (15) aus paarweise gleichen und gegeneinander laufenden Transportelementen besteht.

### Claims

1. A device for injection-moulding insulating discs (5) onto the inner conductor (1) of highfrequency coaxial cables comprising a cylindrical tool carrier (4), which is rotatable about its longitudinal axis and at the circumference of which are located radially arranged forming nests (6) provided with radially outwards extending moulding ducts (9) for forming the insulating discs (5), wherein the forming nests (6) for receiving the inner conductor (1) can be opened and closed, said device further comprising a feeding system for the moulding material, the injection nozzle (8) of which is directed towards theouter surface of the tool carrier (4), and a separation device (15) for separating the moulding material film (10) formed during the injectionmoulding process from the insulating discs (5), characterized in that the injection nozzle (8) is in the form of a slot and the longitudinal direction of the slot extends in the circumferential direction of the tool carrier (4), in that the length dimension of the nozzle slot is larger than the relative distance of adjacent mouiding ducts (9), and in that the separation device (15) is arranged with respect to the tool barrier in such a manner that it separates the moulding material film (10) from the insulating discs (5) at an area of the tool carrier at which the forming nests (6) are still closed.

2. A device as claimed in Claim 1, characterized in that the end face of the injection nozzle (8) is provided at the downstream narrow side with a recess (12), which favours the spreading of the moulding material film (10) in the travelling direction (I3) of the tool carrier (4).

3. A device as claimed in Claim 1 or 2, characterized in that the injection nozzle (8) has a slot length exceeding the distance between two adjacent moulding ducts (8).

4. A device as claimed in Claim 1, 2 or 3, characterized in that the end face of the injectin nozzle (8) is shaped into a concave form in accordance with the curvature of the tool body (4).

5. A device as claimed in any one of Cklaims 1 to 4, characterized in that the separation device (15) is in the form of a roller or consists of a rotating belt, whose axis of rotation (14a) or rotary axis extend parallel to the rotary axis (3) of the tool carrier (4).

6. A device as claimed in Claim 5, characterized in that the separation device (15) consists of pairwise equal transport elements moving in opposite directions.

### Revendications

1. Dispositif de moulage par injection de disques isolants (5) sur le conducteur intérieur (1) de câbles coaxiaux à haute fréquence, muni d'un support porte-outil cylindrique (4) pouvant tourner autour de son axe longitudinal et sur la périphérie duquel, pour la formation des disques isolants (5), sont situées des cavités de moulage (6) disposées radialement et munies de canaux de carotte (9) s'étendant radialement vers l'extérieur, les cavités de moulage (6) pouvant être ouvertes et fermées pour la réception du conducteur intérieur (1), dispositif qui est muni d'un système d'alimentation en matière à mouler dont la buse d'injection (8) est dirigée vers la surface périphèrique du support porte-outil (4), et d'un dispositif de séparation (15) pour séparer des disques isolants (5) le film (10) de matière à mouler formé lors de l'opération de moulage par injection, caractérisè en ce que la buse d'injection (8) est réalisèe sous la forme d'une fente et le sens longitudinal de la fente s'étend dans le sens de la périphérie du support porte-outil (4), en ce que la dimension longitudinale de la fente est supérieure à la distance séparant des canaux de carotte voisins (9) et en ce que le dispositif de séparation (15) est disposé par rapport au support porte-outil de façon à séparer le film (10) de matière à mouler des disgues isolants (5) dans une partie du support porte-outil où les cavités de moulage (6) sont encore fermées.

2. Dispositif selon la revendication 1, caractérisé en ce que, du côté étroit aval, la surface terminale de la buse d'injection présente un évidement (12) favorisant l'étalement du film (10) de matière à mouler dans le sens de déplacement (13) du support porte-outil (4).

3. Dispositif selon la revendication 1 ou 2, caractérisé en ce que la buse d'injection (8) a une longueur de fente supérieure à la distance séparant deux canaux de carotte voisins (9).

4. Dispositif selon la revendication 1, 2 ou 3, caractérisé en ce que la surface terminale de la buse d'injection (8) a une forme concave correspondant à la courbure du support porte-outil (4).

5. Dispositif selon une ou plusieurs des revendications 1 à 4, caractérisé en ce que le dispositif de séparation (15) est réalisé sous la forme d'un rouleau ou d'un cylindre ou est constitué par une bande roulante dont les axes de rotation (14a) s'étendent parallèlement à l'axe de rotation (3) du support porte-outil (4).

6. Dispositif selon la revendication 5, caractérisé en ce que le dispositif de séparation (15) est constitué par des éléments de transport qui sont égaux paire par paire et qui se déplacent dans des sens opposés.

Fig.1

Fig.2a    Fig.2b